# EUROPEAN PATENT APPLICATION

(11) **EP 1 335 301 A2**
(43) Date of publication of application: **13.08.2003**
(21) Application number: 03250358.3
(22) Date of filing: 21.01.2003
(51) Int. Cl.: G06F 17/27

(54) **Context-aware linear time tokenizer**

(30) Priority: 07.02.2002 US 71934
(71) Applicant: Matsushita Electric Industrial Co., Ltd., Kadoma, Osaka 571 (JP)
(72) Inventor: Walther, Markus, Santa Barbara, California 93101 (US)
(74) Representative: Atkinson, Ralph

(57) **Abstract**

A context automaton such as a left context automaton predefined and a right context automaton generate a context record that is combined with pattern knowledge stored in a token automaton to segment an input data stream into tokens. The resulting context-aware tokenizer can be used in many natural language processing application including text-to-speech synthesizers and text processors. The tokenizer is robust in that upon failure to match any explicitly stored token pattern a default token is recognized. Token matching follows a left-to-right longest-match strategy. The overall process operates in linear time, allowing for fast context-dependent tokenization in practice.

## Description

### BACKGROUND AND SUMMARY OF THE INVENTION

The present invention relates generally to tokenization of text strings. More particularly, the invention relates to a linear time tokenizer that takes context into account by specifying presence of auxiliary patterns appearing to the left or right of a given token.

Tokenization is the process of partitioning input text into a contiguous, non-overlapping concatenation of defined substrings or tokens. Tokenization is used in a variety of text processing and linguistic applications, including computer language compilers, natural language processors, text-to-speech synthesis systems, and the like.

To be useful in practice, the tokenizer should, at a minimum, report the position of each token. Many tokenizers also report the class or classes to which the token belongs. For example, certain characters used in typewritten text usually classified as punctuation marks would be identified as tokens belonging to the punctuation class. Individual words might be similarly assigned to one or more classes according to the part of speech or function of the word within the text string or sentence. Token classes need not be mutually exclusive. An instance of a given token might be a member of several classes, all of which should be reported by the tokenizer. Finally, depending on the definition of token patterns and the characteristics of the input text, tokenization results need not be unambiguous. That is, there may be several alternative ways of segmenting an input string while remaining compatible with all defined token patterns.

If a deterministic, unambiguous result is desired, it becomes necessary to specify an additional method that will prefer one tokenization result over another on certain predefined grounds. One such strategy is the left-most, longest-match-first matching strategy which the preferred embodiment of the present invention employs.

Tokenization is said to be robust if it can never fail on any input text. As I discuss here, one way to achieve this is to provide for an implicit default token class, with instances of this class covering those portions of the input text that cannot be covered with any of the explicitly defined tokens. Prior to the present invention a lexical analyzer was described in Reps, Thomas "Maximal-Munch" Tokenization in Linear Time, ACM Transactions on Programming Languages and Systems, Volume 20, No. 2, March 1998, pages 259-273. In this reference, author Reps describes a linear-time tokenizer algorithm that uses a deterministic finite-state automaton to store token patterns and tabulate previously encountered pairs of automaton states and input positions that failed to lead to the identification of a longer token. The Reps approach was not robust, however, in that it had no implicit default token class. By consulting this "failed previously" table in the main scanning loop, the Reps algorithm keeps track of, and avoids repeating, fruitless searches of the input text. Although the algorithm in the reference was designed with programming language compilers in mind, automaton-based pattern storage is particularly attractive also for natural language tokens which often can be highly compressed by automaton minimization.

The Reps algorithm is a linear-time algorithm, referring to the property that the time required to analyze a given text string is a linear function of the length of the string, even for worst case pathological text strings or token patterns. Linear time behavior is the fastest possible behavior for text processing problems that need to inspect the entire input. Not all tokenization algorithms exhibit the linear-time property. Some, for example, may exhibit a quadratic increase in computation time as the text string length increases. Linear-time algorithms are very desirable in several text processing applications, such as text-to-speech processing because here tokenization is only the first of a series of stages, with later stages being (still) more computationally demanding.

The tokenizing process employed in a rudimentary computer language compiler is fairly straightforward, in that the number of tokens to be recognized is relatively small and the language can be defined to avoid ambiguity. Lexical analysis of natural language text is considerably more difficult, because in natural language ambiguity abounds and a large number of tokens needs to be recognized.

By way of illustration, consider the following sentence: "In 2001 CompUSA relocated its store to 1245 W. Gaviota St." A human reading this sentence would understand that the year 2001 would be pronounced "two-thousand one," that the proper name of the store would be pronounced "Comp U-S-A" and that abbreviations "W." and "St." are pronounced "west" and "street." More precisely, the above sentence might be formally tokenized as follows, here using XML-like bracketing of the explicit tokens in question, with multiple token classes separated by the hash sign '#':

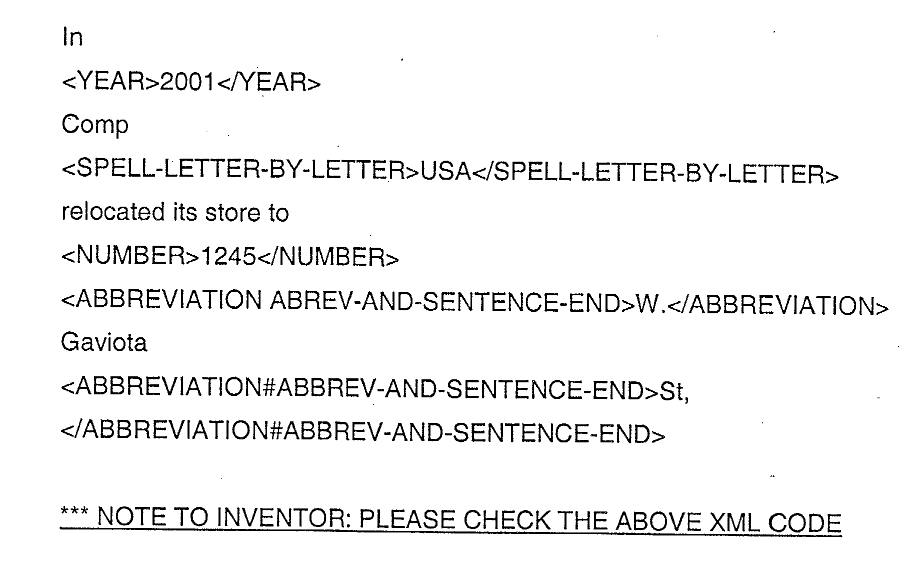

Note that in this particular case a naïve tokenization based on surrounding whitespace and punctuation would fail. "CompUSA" is a single word, but needs to be split into the (default) token "Comp" and an explicit tokenization "USA" for purposes of proper pronunciation (Comp-you-as-ey). The naïve tokenization process would similarly have difficulty with the abbreviation "W." because such abbreviation belongs to multiple classes. It can either be just an abbreviation for, inter alia, "West", or it can be in addition a signal or sentence ending by way of in final period. Only subsequent linguistic processing can decide on the correct alternative here. Finally, the naïve approach would fail for languages that do not have word delimiters in their script, in particular certain Asian languages such as Japanese and Chinese. On the other hand, a more sophisticated approach that, like the present invention, identifies tokens by their intrinsic content rather than surrounding boundary information, has to solve the problem of incompleteness: natural language creativity in coming new words, in particular names like "Sanola" is unlimited, hence methods that rely on exhaustive storage of token content are unrealistic.

The present invention approaches the problem of tokenizing more difficult text strings, such as the example illustrated above, by exploiting a contexted tokenization process that allows for specifying the presence of auxiliary "context" patterns to the left and right of the token. In other words, the context of a token is taken into account and is used as a precondition to its recognition. Contextual tokenization solves the CompUSA tokenization problem by defining, for example, the "spell-letter-by-letter" class to contain all uppercase strings, but include lowercase letters among its left-context requirements. The present invention also solves the multiple class problem by reporting all token classes a given token belongs to. Finally, it also addresses the incompleteness problem by implementing a default token concept, whereby the longest substring that does not contain any explicitly defined token content is assigned a special default token class.

To achieve contexted tokenization, the present invention employs at least one context automaton, preferably two: a left-context identifier and a right-context identifier. With the help of these, context records corresponding to the presence or absence of auxiliary patterns to the left and right of a given token are created. The system and method further employs a tokenizer designed to segment the input text into substrings corresponding to tokens represented by position and class membership. The tokenizer makes use of the context records as a precondition to its recognition. Additionally, the tokenization process does not treat a failure to recognize any explicitly defined token as fatal. In both of these respects the algorithm differs significantly from the linear time algorithm described in Reps.

The invention is thus well suited for more challenging text processing applications such as those encountered in natural language processing and text-to-speech processing.

For a more complete understanding of the invention, its objects and advantages, refer to the remaining specification and to the accompanying drawings.

### BRIEF DESCRIPTION OF THE DRAWINGS

The present invention will become more fully understood from the detailed description and the accompanying drawings, wherein:

FIG. 1 is a block diagram of a presently preferred tokenizer, illustrating how an input text is broken into substrings using right and left context as a precondition to recognition;

FIG. 2 is a state diagram illustrating an exemplary left-context automaton;

FIG. 3 is a state diagram illustrating an exemplary right-context automaton;

FIG. 4 is a state diagram illustrating an exemplary token automaton.

### DETAILED DESCRIPTION OF THE PREFERRED EMBODIMENTS

The following description of the preferred embodiment(s) is merely exemplary in nature and is in no way intended to limit the invention, its application, or uses.

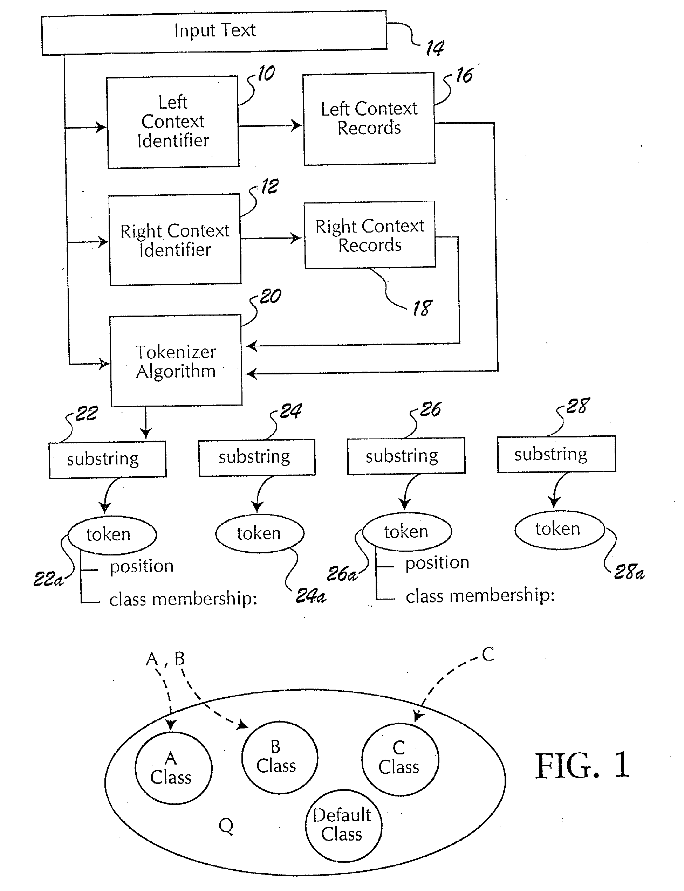

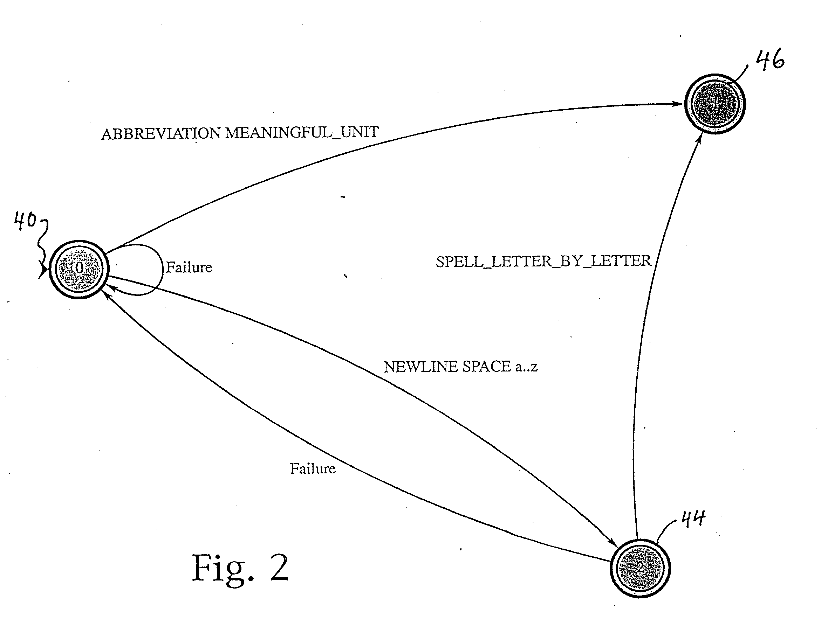

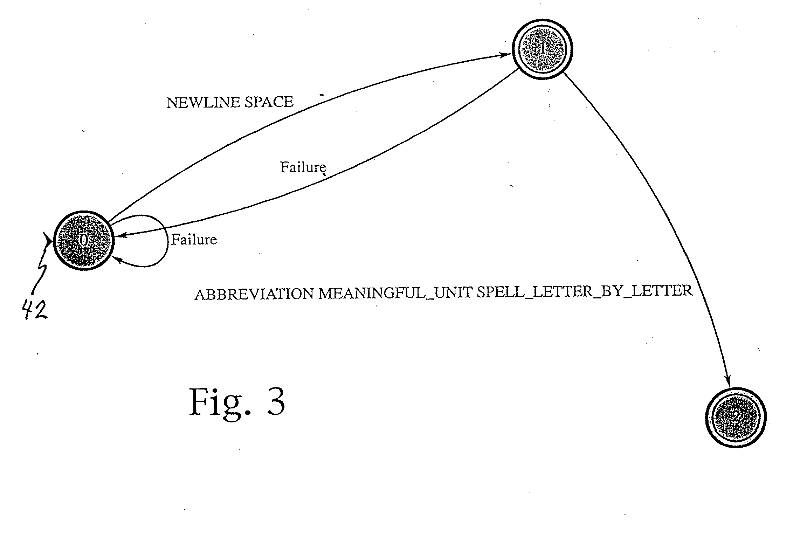

In its basic form the tokenizer of the present invention employs a context identifier system and a tabulating tokenization algorithm. The presently preferred implementation employs separate left-context identifier 10 and right-context identifier 12, as illustrated in FIG. 1. These context identifiers are implemented as state machines or automatons as illustrated in FIGs. 2 and 3, respectively (See Hopcroft, J.E. and Ullman, J.D. 1979: Introduction to Automa Theory, languages, and computation, Addison-Wesley for a standard text book reference. They operate upon an input text 14 to develop respective left and right-context records 16 and 18. The system further employs a tabulation tokenizer automaton 20.

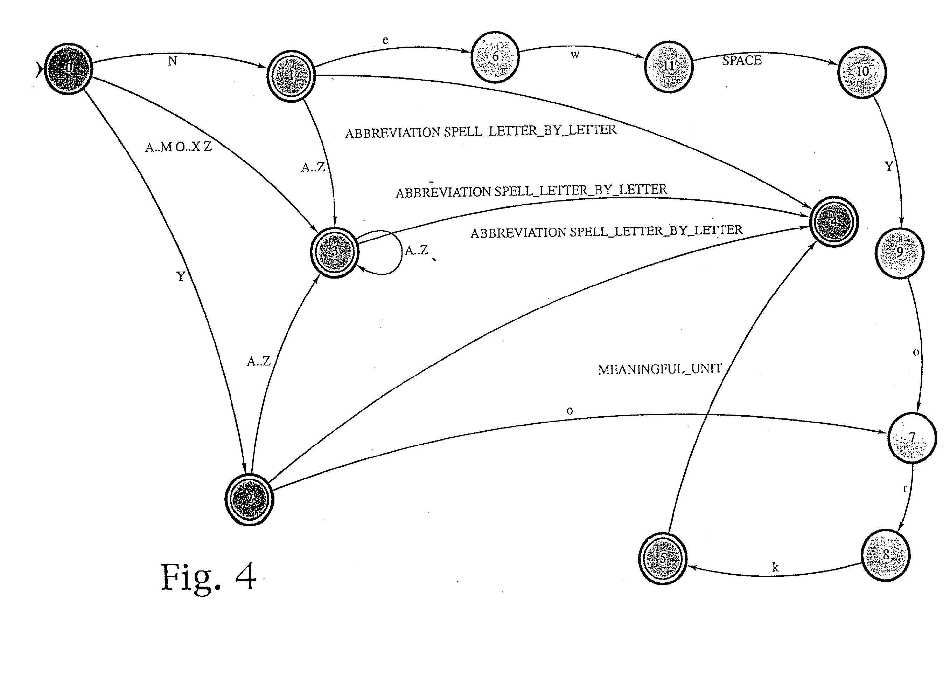

FIG. 4 illustrates an example of a token automaton. Specifically, the illustrated token automaton suffices to segment the example sentence, "NYPD headquarters are next to CompUSA in New York." This sentence might be tokenized as follows (where again tokens are represented using XML-style tags: <TokenClass>token</TokenClass> and where multiple token classes per tag are separated by the hash symbol '#'):

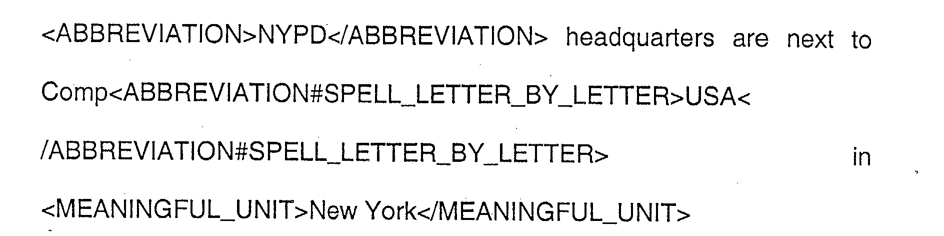

The patterns and contexts used in the previous example are more precisely defined as follows:

ABBREVIATION comprises all non-empty strings with only uppercase letters A..Z, requiring no special left context (=empty context) and a whitespace character as right context.

SPELL_LETTER_BY_LETTER comprises all non-empty strings with only uppercase letters A..Z, requiring either a whitespace or a lower-case character as left context and a whitespace character as right context.

MEANINGFUL_UNIT comprises the two strings "York" and "New York", requiring no special left context (=empty context) and a whitespace character as right context.

These definitions are directly reflected in the automata displayed in Figures 2-4.

Referring to FIG. 1, the tokenizing algorithm 20 examines the input text 14 but does not make any final pattern recognition decisions until consulting the left and right context records 16 and 18. The output of tokenizing automaton 20 consists of a concatenated set of non-overlapping substrings 22-28, which correspond to individual identified tokens 22a-28a. In the presently preferred embodiment each token captures basic information about the substring, that is, the position of the substring within the input text, and its class membership. In the preferred embodiment a substring (token) can belong to more than one class. Thus the class membership information associated with each token can consist of a list of all classes to which that token belongs. In FIG. 1, Q represents the set of all possible classes (in this case classes A, B, C and a default class have been illustrated.) Token 22a belongs to two classes, namely A and B. Token 26a belongs to only one class, namely class C. The details of the default class will be discussed more fully below.

Referring now to FIGs. 2 and 3, examples of the left and right-context automatons have been illustrated. In all of the state diagrams illustrating automatons (FIGs. 2, 3 and 4) the following diagrammatic convention is used. All states are illustrated as numbered circles and all transitions between states are illustrated as arrowed lines. Final states or terminating states are illustrated by double concentric circles, and the initial or starting state is illustrated by a circle with tailless arrowhead pointing to it. Thus, for example, in FIG. 2 the starting state appears at 40. All three states illustrated in FIG. 2 are final states (double concentric circles). By way of comparison, in FIG. 3, the starting state is illustrated at 42 and that state happens to be a non-final state (single circle).

In each of the state transition diagrams (FIGs. 2-4) a transition from state X pointing at state Y labeled with L means that, if the current state is X, the new state will be Y provided that the current input symbol is identical to L. Note that the state diagrams of FIGs. 2-4 represent just one way of associating token classes with final states within the same automaton, e.g. transitions 0 → 1, 2 → 1 in FIG. 2. Where there are multiple transition between the same two states, these have been represented by showing multiple labels adjacent to each other on the state transition arrow line. Thus, for example, in FIG. 2, the transition from state 0 to state 2 abbreviates a set of 28 transitions labeled with the new line symbol (NEWLINE), the whitespace symbol (SPACE), and the letters a-z.

It should be understood that the state transition diagrams of FIGs. 2-4 are merely examples of possible state transition diagrams in accordance with the invention. Specifically, the state transition diagram of FIG. 2 embodies certain left-context conditions. The illustrated automaton serves as left context for the classes spell-letter-by-letter (e.g. USA) and abbreviation-as-meaningful-units (e.g. NYPD). Similarly, the right-context automaton shown in FIG. 3 is appropriate to check for both spell-letter-by-letter and abbreviation-as-meaningful-units' context requirements.

The automaton illustrated in FIG. 4 presents an example of a specific pattern tokenizer. Specifically, the example illustrated in FIG. 4 may be used to recognize sentences such as "NYPD headquarters are next to CompUSA in New York. Thus the tokenizer is capable of identifying patterns such as "New York" and also the pattern "York". Of course, this is but one example of an automaton in accordance with the present invention. Those skilled in the art will appreciate how to construct other automatons to recognize other patterns.

A presently preferred embodiment of the context aware linear time tokenizer is illustrated in the Pseudocode Listing 1, appearing in the Appendix below. To aid in the explanation, each line of the pseudocode has been numbered and this description will refer to those line numbers. Note that the pseudocode incorporates three additional routines (ScanContext, IsFinalAndContextLicensed, and PrintTokenization) which appear as Listings 2-4 in the Appendix below.

In Listing 1, <*Q*, Σ, δ, *q*₀, *F> = M* and its renamed variants are the usual 5-tuple representation of a deterministic finite-state automaton, with *Q* a finite set of states, Σ a finite nonempty set of alphabet symbols, δ the transition function *Q* x Σ |→2^{*Q*}, *q*_{*0*} ∈ *Q* a distinguished start state and *F* ⊆ *Q* a set of final states.

In a conventional tokenizer algorithm such as the prior art (Reps. 1998), only the end position of a token is typically reported. In the preferred embodiment of the invention, however, the tokenizer algorithm reports the token class as well. This functionality appears in Listing 3, at line 60 (Appendix), where the value q is used to access a final-state-to-token-class mapping.

According to one preferred embodiment, the algorithm adds, for each token class associated with a final state *q*, one pseudo-transition leaving that state, whose destination state is reinterpreted as a token class identifier. Note that this differs somewhat from the illustrative drawings in Figure 2-4, where the token class is represented by a transition label, not a state. Since the mapping may be one-to-many, an automata representation capable of representing nondeterminism is called for. The pseudo-transition may be distinguished, for example, by employing an otherwise unused reserved transition label. Collecting destination values for all pseudo-transitions emanating from *q* gives the list of token classes that the just recognized token belongs to. In an important extension to this scheme, a numerical weight could also be stored per pseudo-transition, allowing for a preferential ranking of token class among multiple class memberships for any given token.

With continued reference to the Listings of the Appendix, note that the presently preferred embodiment employs a unique implementation of the default token. Seen in lines, 72, 93, 94, 99, and 102-108, the improved default token implementation enables the robustness of the algorithm by allowing it to take specific action when the failure to recognize condition occurs. Unlike the prior art, failure to recognize any explicitly defined token is no longer fatal and tokenization is always possible, thanks to the default token concept.

In the preferred embodiment, care is given to ensure that the default token also obeys the longest-match regime (lines 102-104). Token-position pairs are now stored in a queue, a first-in-first-out data structure allowing constant-time operations for insertion and deletion at its ends. Consecutive failure signals advancement within a default token, so the token-position pair belonging to the previously hypothesized shorter default token is retracted (lines 103-104). Advantageously, the algorithm still exhibits linear time execution.

The preferred algorithm is designed to process final states in a special way to implement context checking (Listing 3, lines 85, 94). Not only must such a state q be a final state in the token pattern automaton *M*, but at least one of the token classes associated with *q* must also be associated with both of the context states stored in the context records that immediately surround the start and end positions of the pattern whose automaton path ends in *q*.

The following will explain how contexts are identified in the first place, how they can themselves be recognized in linear time so as to preserve overall efficiency, and how the start position of a pattern is determined. Addressing the last issue first, the start position of a pattern is determined when recognition of a new pattern starts with resetting state *q* to the start state *q*_{*0*} in line 76. At line 77, the algorithm then stores the value of position counter *i* in the variable token startpos.

Context identification is performed as follows. In the interest of generality, allowable contexts *L, R* may be treated as arbitrary regular expressions, hence they can be represented by deterministic finite-state automata as well. In the general case, therefore, recognizing a token t in contexts *L..R* means that an arbitrary string taken from the automaton alphabet - formally representable as the regular expression Σ* - may precede *L* and follow *R*. However, direct representation of *Σ*L* or *R*Σ* for encoding context dependence can be very expensive in terms of size when using deterministic automata. This is unfortunate because determinism is essential to linear-time recognition with automata.

Fortunately failure-function automata can represent this special case efficiently without loosing determinism by employing distinguished 'Failure' transitions whenever no explicit automaton transition matches the current input symbol. For any given regular expression *A*, an algorithm exists to transform its corresponding automaton *M*_{*A*}, mostly by just adding appropriate failure transitions, so that the overall behavior amounts to the recognition of *Σ*A* (see Mohri 1997) String-Matching with Automata, Nordic Journal of Computing Vo. 2 (4), pp. 217-231. It is presupposed here that this or any similar algorithm with the same functional result is used to compute offline the context automata employed in the present invention.

More precisely, failure-function automata are used in the present context as follows: each context is specified via an arbitrary regular expression and concatenated with the union of all the token classes of which it is a context. The empty string is made part of this union, so that context recognition always encounters a final state before reading a subsequent token class symbol. Another union of all such individual contexts is formed and the result is finally compiled into a single deterministic failure-function automaton (FFA).

For left contexts, building the FFA as described above is all that is needed. For right contexts, however, something else must be done first. Given that reading strings from right to left with reversed contexts is equivalent to left-to-right reading of original strings, the string reversal operation (a legitimate finite-state operator) is applied to the union of individual contexts before building the FFA. Notably, all such automaton construction can be performed as an offline process that does not reoccur at each online tokenization of an input string.

Applying contexts-as-failure-function-automata at tokenization time is now straightforward. Prior to tokenization proper (line 71-115), the left-context FFA is run from left to right to recognize the entire input string (line 68), and any final states encountered during that process are recorded at their input string position in an additional array 'leftContext' of length(input) size. Similarly, the right-context FFA recognizes the entire input starting from the right end of the input string (line 69). Clearly, each of the two recognition runs finishes in time linear in the length of the input. Even though string recognition might now include following failure transitions, the total number of failure or forward transitions traversed per recognition run is bounded by 2 · length (input).

Whenever the main tokenization procedure now encounters a final state *q*_{f} at position *i*, it checks both the 'leftContext' and the 'rightContext' arrays via function 'IsFinalAndContextLicensed' (Listing 3) to ensure that their content at position *i* contains valid final states ^{*q*}*R*_{*f*} and ^{*q*}*L*_{*f*}, respectively, whose subsequent token class symbols both are of the same class as the main automaton state *q*_{*f*}. If, and only if that condition holds is the state *q*_{*f*} decreed as a 'final' state and thus treated as a detected context-verified token. The additional work needed to check these conditions is a function only of the maximum number of outgoing transitions in final states, a constant that is independent of the input size; hence it can be performed in constant time and the overall execution time still remains linear.

To further exemplify the runtime behavior of the procedure Tokenize in Listing 1, below a small example is presented. Displayed are:
• input[1..length(input)],
• arrays left_context[1..length(input)],
• right_context[1..length(input)]
• U in right_context abbreviates the constant 'Undefined', see line 36 ]:

| Position | 1 | 2 | 3 | 4 | 5 | 6 | 7 | 8 |
|---|---|---|---|---|---|---|---|---|
| input: | C | o | m | p | U | S | A | [space] |
| left context: | 0 | 2 | 2 | 2 | 0 | 0 | 0 | 2 |
| right context: | U | U | U | U | U | U | U | 1 |

In the above example, a default token is recognized between input positions 1 and 4. A token belonging to the two classes {ABBREVIATION,SPELL_LETTER_BY_LETTER} is recognized between input positions 5 and 7. A single-character default token is again recognized between input positions 8 and 8.

It is possible to improve the average context-scanning work (currently *always* triggered by lines 68-69) by only running the context FFAs on demand, whenever a context-requiring token is recognized on its own by the main automaton *M*_{*token*}. Also, as another optimization, the context FFAs need only scan the region from left or right end of input to left or right end of the token. This might be an important modification in practice, although in the worst case context verification will still involve checking the entire input string.

To further improve storage efficiency, the three independent automata that form the method's pattern knowledge base can also be overlaid on each other, as follows. Starting from the same-numbered start state in each component automaton, each transition with the same label is represented at most once. States are renumbered in the component automata as necessary to ensure this. A 3-tuple bitvector per transition has its *i*-th component set to 1 if and only if the transition was present in the original of the *i*-th component automaton. To follow an individual component transition in the resulting aggregate automaton, its component bit must be set. The memory savings achievable with this optimization depend on the amount of sharing between the pattern spaces of tokens and contexts and need to be balanced against the costs of storing the bitvectors themselves.

The context-aware linear-time tokenizer is well suited for a variety of text processing and linguistic applications. In a text-to-speech synthesizer, for example, the tokenizer can be used to identify unprounceable words in need of modification to make them pronounceable ("$5 bill" → < MONEY) $5 </MONEY > bill → "five dollar bill"). The linear time architecture of the invention ensures that this processing can be performed quickly with comparatively small computational requirements. Other applications include search and retrieval of meaningful units in text (e.g., allowing a word processor to search and retrieve multi-word phrases, like "New York", and give them a single unit treatment).

The invention is also useful in processing of languages that do not have spaces or punctuation between words, such as Japanese or Chinese. Tokens would be sequences (e.g.) Japanese or Chinese characters, and context could be set up to disambiguate between alternative tokenizations. The invention makes segmenting such texts far more attainable.

Overall, the invention is well suited for numerous applications, particularly those requiring multilingual text-to-speech synthesis, speech-enabled email or web page readers, speech enabled mobile devices, reading machines for the blind, and in legacy text processing software, particularly those designed to cover Asian languages as well.

The description of the invention is merely exemplary in nature and, thus, variations that do not depart from the gist of the invention are intended to be within the scope of the invention. Such variations are not to be regarded as a departure from the spirit and scope of the invention.

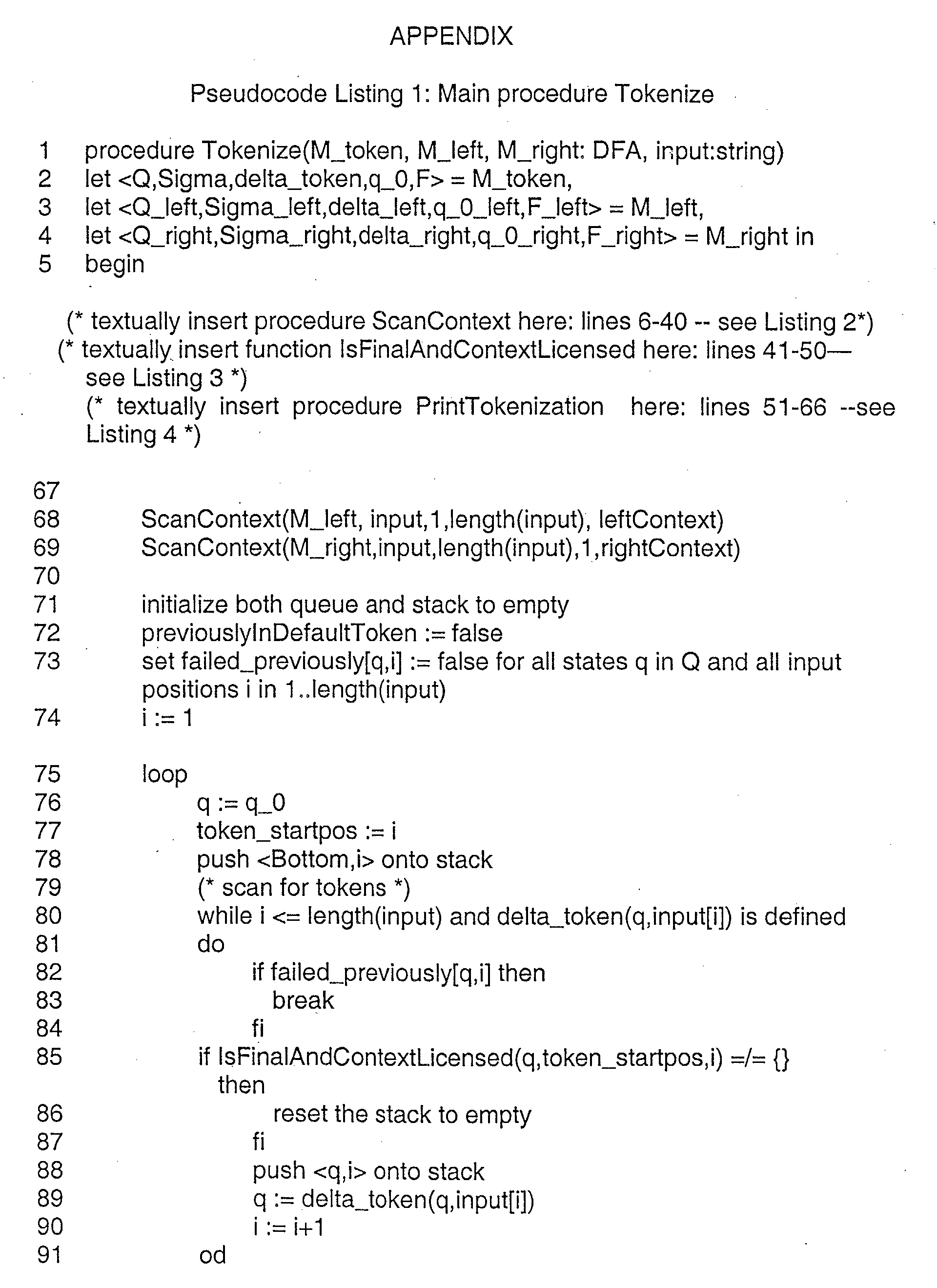

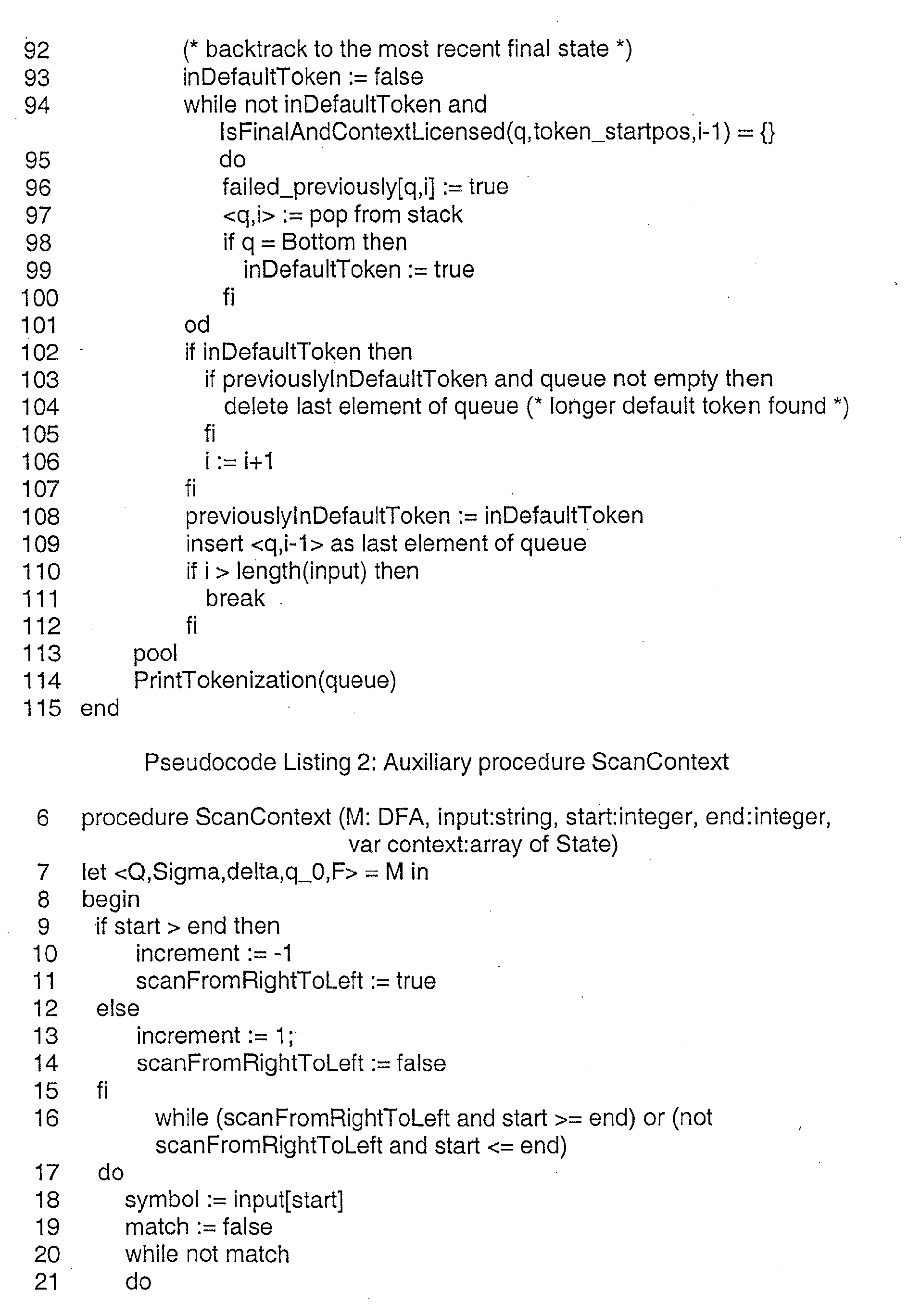

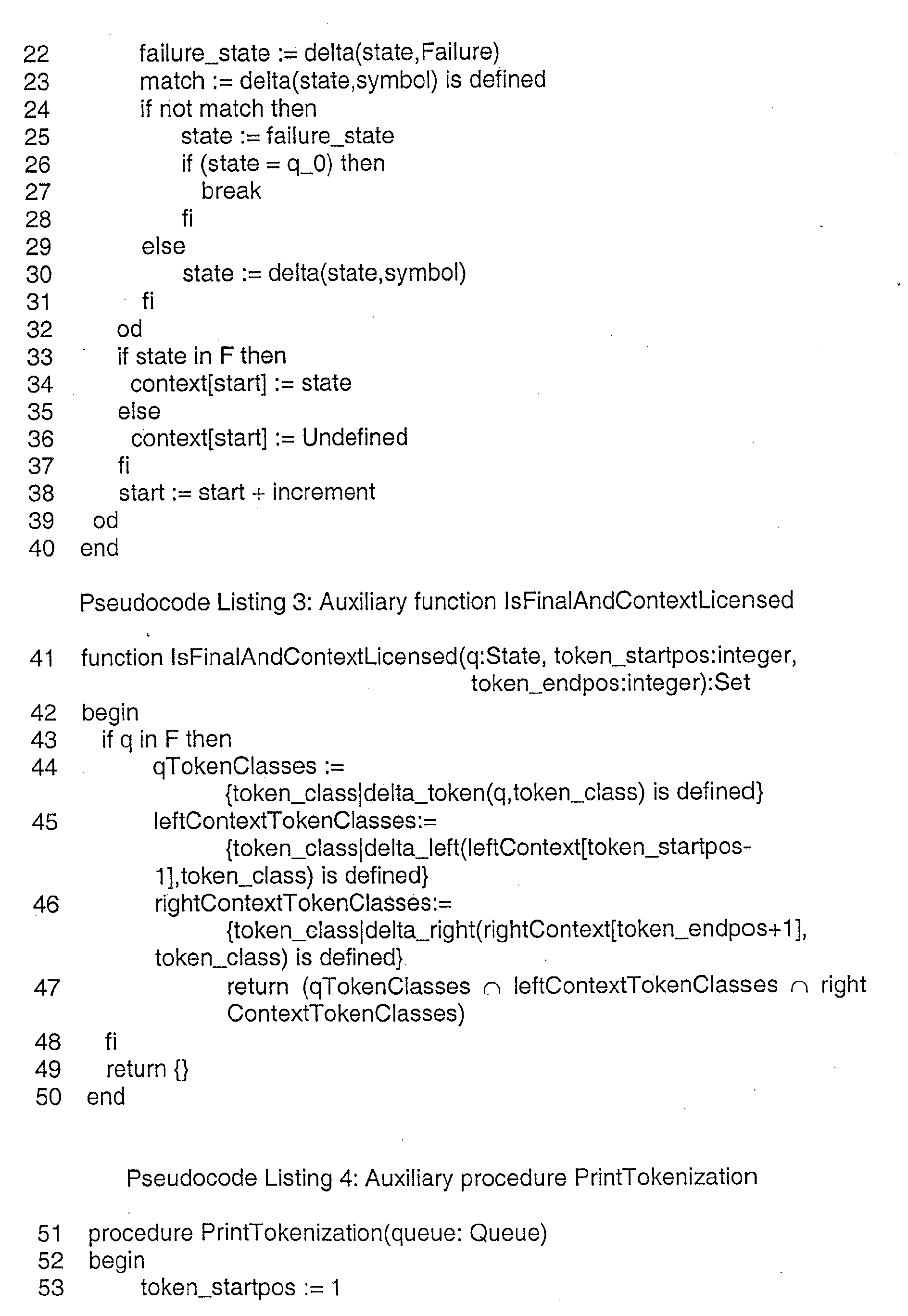

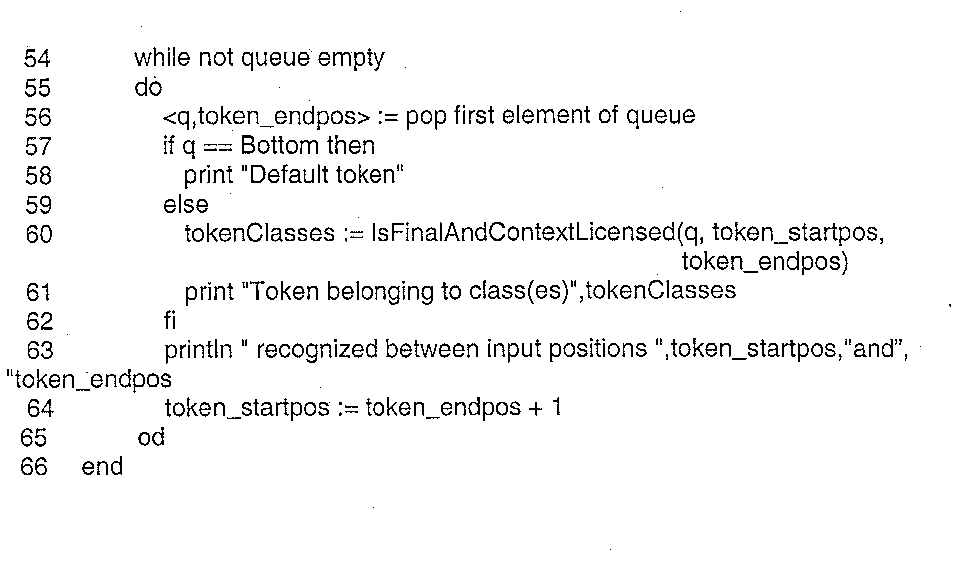

## Claims

**1.** A context-aware tokenizer comprising:
at least one context automaton module that generates a context record associated with tokens of an input data stream;
a tokenizing automaton module having a token automaton that partitions said input data stream into predefined tokens based on pattern information contained in said token automaton while simultaneously verifying contextual appropriateness based on said context record.

**2.** The tokenizer of claim 1 wherein said context automaton module comprises a left context automaton that populates said context record based on identified patterns that precede a given token and a right context automaton that populates said context record based on identified patterns that follow said given token.

**3.** The tokenizer of claim 1 wherein said tokenizing automaton module maintains a data store of predefined token classes and assigns each token identified to at least one of said predefined token classes.

**4.** The tokenizer of claim 3 wherein said tokenizer reports information indicative of the position and class membership of tokens identified.

**5.** The tokenizer of claim 1 wherein said tokenizing automaton defines a failure state, and wherein said tokenizing automaton module monitors the occurrence of said failure state to maintain a record of the longest match found involving said failure state to detect a default token in the absence of any matching patterns taken from said context automaton module and said token automaton module.

**6.** The tokenizer of claim 1 wherein said context automaton scans said input data stream in a left-to-right direction to acquire left context information and in a right-to-left direction to acquire right context information.

**7.** The tokenizer of claim 1 wherein said context automaton and said tokenizing automaton collectively obey a linear time operating constraint.

**8.** A text-to-speech synthesizer according to claim 1 wherein said input data stream is a text string and said tokenizing automaton module partitions said text string to include token class membership information from which the pronunciation of said text string by said synthesizer is influenced.

**10.** A text processor according to claim 1 wherein said input data stream comprises text and said tokenizing automaton is coupled to said text processor and operates upon said text to identify and label multi-word phrases for single unit treatment by said text processor based on information extracted by said context automaton.

**11.** A text processor according to claim 1 wherein said input data stream lacks word unit separation symbols and wherein said tokenizing automaton module is coupled to said text processor and operates upon said text to identify and label word units for single unit treatment by said text processor based on information extracted by said context and token automata.

**12.** A method of tokenizing an input stream comprising:
using at least one context automaton to generate a context record associated with tokens of said input stream;
using at least one tokenizing automaton to segment said input stream into predefined tokens based on pattern information contained in said context record.

**13.** The method of claim 12 wherein said step of generating said context record is performed using a left context automaton to populate said context record based on identified patterns that precede a given token and a right context automaton to populate said context record based on identified patterns that follow said given token.

**14.** The method of claim 12 further comprising maintaining a data store of predefined token classes and assigning each token identified to at least one of said predefined token classes.

**15.** The method of claim 12 further comprising reporting for each token information indicative of its position, length and class membership.

**16.** The method of claim 12 further comprising defining a failure state and monitoring the occurrence of said failure state to maintain a record of the longest match found involving said failure state to thereby detect a default token in the absence of any matching patterns generated by said context and token automata.

**17.** The method of claim 12 further comprising scanning said input stream in a first direction to acquire left context information and in a second direction to acquire right context information.

**18.** The method of claim 12 wherein said steps of generating a context record and of segmenting the input stream collectively obey a linear time operating constraint.

**19.** The method of claim 12 further comprising generating tokenization information about said input stream that includes class membership of said predefined tokens and supplying said tokenization information to a text-to-speech synthesizer.

**20.** The method of claim 12 further comprising generating tokenization information about said input stream that includes class membership of said predefined tokens and supplying said tokenization information to a text processor.
